Europäisches Patentamt

European Patent Office

Office européen des brevets

(19)

(11) Publication number: **0 105 271**
**B1**

(12) **EUROPEAN PATENT SPECIFICATION**

(45) Date of publication of patent specification: **28.05.86**

(21) Application number: **82903196.2**

(22) Date of filing: **26.10.82**

(86) International application number:
**PCT/SE82/00354**

(87) International publication number:
**WO 83/01476 28.04.83 Gazette 83/10**

(51) Int. Cl.⁴: **E 04 B 1/40** // E04B2/74,
F16B2/22

(54) **SNAP FASTENING DEVICE.**

(30) Priority: **26.10.81 SE 8106320**

(43) Date of publication of application:
**18.04.84 Bulletin 84/16**

(45) Publication of the grant of the patent:
**28.05.86 Bulletin 86/22**

(84) Designated Contracting States:
**AT DE FR GB NL**

(56) References cited:
**CH-A- 511 988**
**DE-A-1 575 273**
**DE-A-2 010 663**
**FR-A-2 039 418**
**GB-A-1 528 464**
**GB-A-2 014 643**
**SE-B- 303 579**

(73) Proprietor: **AHLBERG BECKROT YTTER AB**
**Igeldammsgatan 22**
**S-112 49 Stockholm (SE)**

(72) Inventor: **AHLBERG, Erik Ola**
**Bägerstavägen 20**
**S-121 63 Johanneshov (SE)**
Inventor: **BECKROT, Anders Valter**
**Örsundet**
**S-130 35 Ingarö (SE)**

(74) Representative: **Wiedemann, Bernd et al**
**AB Dahls Patentbyra P.O. Box 19519**
**S-104 32 Stockholm (SE)**

Courier Press, Leamington Spa, England.

### Description

The present invention is related to an integrally moulded snap fastening device of plastics intended to detachably joint two slotted hollow profiles to each other, said device comprising, on one hand, two snap acting projections each comprising two surfaces, which are inclined and adjoin each other, and, on the other hand, two holding projections, which each comprises a shoulder substantially undisplaceable provided in the direction towards said snap acting projections, said snap acting and holding projections being in pairs provided on the sides faced from each other and at the opposite outer ends of two parallel, elastic shanks which are connected to each other by means of a web, so that the shoulders of the holding projections are faced towards the snap acting projections.

DE—A 2 010 663 describes a snap fastening device consisting of an elongated body. Said body comprises two parallel flanges integrally connected to each other by a web. The cross-section of the body is forming an H. Each of the opposite ends of the web has an axial slot or cut out weakening the web. At each of the opposite ends of each flange there is a shoulder extending along the whole length of the flange. The shoulders are adapted to receive and engage in retaining relationship two structural elements. The wall thickness of the flanges is decreasing from the ends towards the web.

It is an object of the invention to provide a snap fastening device which both can be fixed in a slot in a first profile and by a snap effect removably fasten a second profile to said first profile.

Another object of the invention is to provide a snap fastening device, which is simple to its function and which is well anchored in one of said two bodies.

The object is obtained according to the invention by a snap fastening device wherein said web is situated substantially at the same level as the shoulders of the holding projections.

By providing said web substantially at the same level as said shoulders the snap acting projections obtain a greater elasticity. Moreover, by forming said web as a V with the point of said V faced from the snap acting projections both the snap acting projections and the holding projections obtain a greater elasticity concerning the flexibility sidewards. As to the holding projections those are thereby able to be introduced by a snap effect into a slot. When the second profile is placed on the first profile, the movement of the snap acting projections is restricted sidewards and thereby also the movement of the holding projections sidewards, whereby the holding projections are locked into place.

Preferred embodiments of the invention have been given the characteristics in the subclaims.

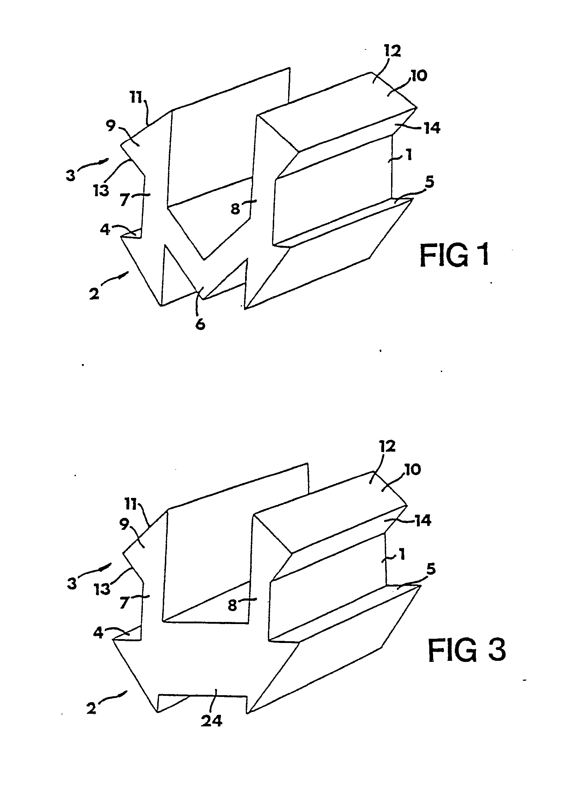

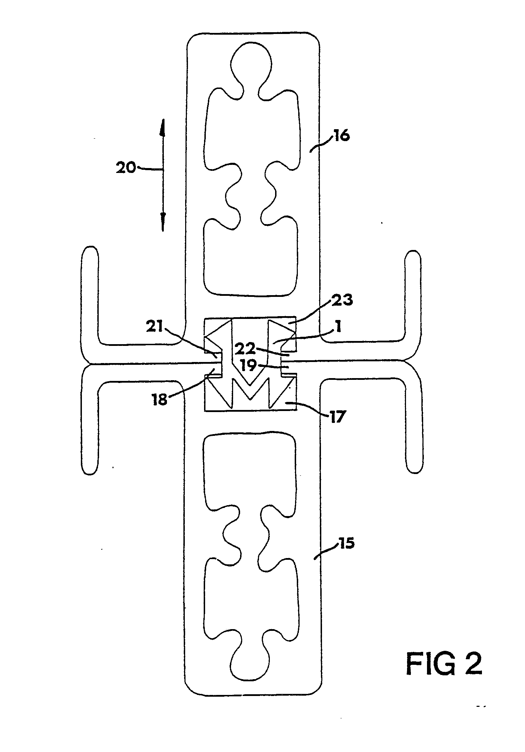

The invention is to be described better in the following with reference to the accompanying drawings showing preferred embodiments. Fig. 1 is a perspective view of a first embodiment of a snap fastening device according to the invention. Fig. 2 is a section through two profiles attached to each other, said profiles being fastened to each other by means of a snap fastening device according to Fig. 1. Fig. 3 is a second embodiment of a snap fastening device according to the invention.

A snap fastening device 1 according to the invention consists of a holding part 2 and a snap fastening part 3, said holding part consisting of two shoulders 4, 5 and a V-formed web 6 connecting said shoulders to each other. Said snap fastening part 3 consists of two shanks 7, 8, which can be elastically pressed towards each other, and projections 9, 10 formed on each shank. The projections have upper inclined surfaces 11, 12 and lower inclined surfaces 13, 14.

The elastic shanks 7, 8 can be elastically pressed towards each other and return thereafter to their original positions. While placing the web 6 as shown in the drawing at the same level as the shoulders 4, 5, the effect will be that the shoulders 4, 5 will not be displaced from their mutual positions even if the shanks 7, 8 are pressed together.

In Fig. 2 it can be seen how the snap fastening device according to the invention is used to hold two profiles 15, 16 to each other, which are intended to be hold detachably to each other displaceably sidewards. As can be seen in Fig. 2 the holding part of said snap fastening device 1 is introduced in a track 17 in said profile 15 so that the shoulders 4, 5 abuts against flanges 18, 19 at the opening of said track. The profile 16 can be brought to abutment against or be detached from said profile 15 in directions showed by a double arrow. When the upper profile 16 is to be brought to abutment against the lower profile 15 and be fastened thereon two flanges 21 and 22 at the opening of a track 23 are pressed against said projections 9 and 10 over inclined sides 11, 12, said shanks 7 and 8 being elastically pressed against each other so that the snap fastening part can be introduced between the flanges 21, 22 into said track 23. When the profile 16 is to be removed from said profile 15 the flanges 21, 22, in the same way, are pressed against the inclined lower surfaces 13, 14 of said projections 9 and 10 so that they elastically move against each other and the snap fastening part can be moved out through said opening between said flanges 21, 22.

The snap fastening device according to the invention, which preferably is extruded integrally from a plastic material, can for instance be formed in long lengths thereafter.

In Fig. 3 another embodiment of the snap fastening device 1 according to the invention is shown, in which details similar to details in the embodiment of Fig. 1 have been given the same references. This snap fastening device has a web 24 which differ substantially from the V-formed web 6 of the embodiment according to Fig. 1. With this broad web 24 according to the embodiment of Fig. 3 a more stabile snap fastening device is obtained, in which the shoulders 4 and 5 are completely locked in their positions and the elastic resistance in the shanks 7, 8 is substantially greater.

The projections 9 and 10 can of course be formed in other ways. Instead of plane surfaces 11, 12, 13, 14 a curved surface can be provided, e.g. a hemi-cylindrical surface, said curved surface being such that substantially the same effect is obtained as with the plane surfaces in the embodiments according to Figs. 1 and 3.

The invention can of course be modified further within the scope of the accompanying claims.

## Claims

1. Integrally moulded snap fastening device of plastics intended to detachably join two slotted hollow profiles (15, 16) to each other, said device comprising, on one hand, two snap acting projections (9, 10) each comprising two surfaces (11, 13 and 12, 14, respectively), which are inclined and adjoin each other, and, on the other hand, two holding projections, which each comprises a substantially undisplaceable shoulder (4, 5) provided in the direction towards said snap acting projections, said snap acting and holding projections being in pairs provided on the sides faced from each other and at the opposite outer ends of two parallel, elastic shanks which are connected to each other by means of a web (6, 24), so that the shoulders of the holding projections are faced towards the snap acting projections, characterized in that said web (6, 24) is situated substantially at the same level as the shoulders (4, 5) of the holding projections.

2. Snap fastening device according to claim 1, characterized in that said web (6) is V-formed with the point of said V faced from the snap acting projections (9, 10).

3. Snap fastening device according to claim 1, characterized in that said web (24) is substantially rectangular in section.

## Patentansprüche

1. Einstückig aus Kunststoff geformte Schnappvorrichtung zur lösbaren Befestigung zweier geschlitzter Hohlprofile (15, 16) aneinander, mit einerseites zwei Schnappvorsprüngen (9, 10) mit je zwei Flächen (11, 13 bzw. 12, 14), die zueinander geneigt sind und aneinander anschließen, und anderseits zwei Haltevorsprüngen, deren jeder in Richtung zu den Schnappvorsprüngen eine im wesentlichen nicht verlagerbare Schulter (4, 5) aufweist, wobei die Schnappvorsprünge und die Haltevorsprünge paarweise an den voneinander abgewendeten Seiten und an den entgegengesetzten äußeren Enden zweier paralleler elastischer Schenkel angeordnet sind, welche über einen Steg (6, 24) miteinander verbunden sind, so daß die Schultern der Haltevorsprünge den Schnappvorsprüngen zugewendet sind, dadurch gekennzeichnet, daß der Steg (6, 24) im wesentlichen auf gleicher Höhe liegt wie die Schultern (4, 5) der Haltevorsprünge.

2. Schnappvorrichtung nach Anspruch 1, dadurch gekennzeichnet, daß der Steg (6) die Form eines V hat, dessen Spitze von den Schnappvorsprüngen (9, 10) abgewendet ist.

3. Schnappvorrichtung nach Anspruch 1, dadurch gekennzeichnet, daß der Steg (24) einen im wesentlichen rechteckigen Querschnitt aufweist.

## Revendications

1. Dispositif d'assemblage à encliquetage en matière plastique moulé en une seule pièce destiné à assembler l'un à l'autre d'une manière amovible deux profilés creux rainurés (15, 16), ce dispositif comprenant, d'une part, deux bossages (9, 10) d'encliquetage, dont chacun comprend deux surfaces (11, 13 et 12, 14 respectivement) qui sont inclinées et se rejoignent et, d'autre part, deux bossages de retenue, dont chacun comprend un épaulement (4, 5) à peu près fixe formé dans le sens dirigé vers lesdits bossages d'encliquetage, lesdits bossages d'encliquetage et de retenue étant formés par paires qui sont disposés sur les faces opposées l'une à l'autre et aux extrémités extérieures opposées de deux branches élastiques parallèles qui sont reliées l'une à l'autre par une âme (6, 24), de sorte que les épaulements des bossages de retenue regardent vers les bossages d'encliquetage, caractérisé en ce que ladite âme (6, 24) est située à peu près au même niveau que les épaulements (4, 5) des bossages de retenue.

2. Dispositif d'assemblage à encliquetage selon la revendication 1, caractérisé en ce que ladite âme (6) est en forme de V, le sommet du V pointant dans le sens qui s'éloigne des bossages d'encliquetage (9, 10).

3. Dispositif d'assemblage à encliquetage selon la revendication 1, caractérisé en ce que ladite âme (24) est de section à peu près rectangulaire.

0  105  271

FIG 1

FIG 3

1

FIG 2